(19)

Europäisches
Patentamt
European
Patent Office
Office européen
des brevets

(11)  **EP 4 737 946 A1**

(12)  # EUROPEAN PATENT APPLICATION

(43) Date of publication:
    **06.05.2026  Bulletin 2026/19**

(21) Application number: **25211080.4**

(22) Date of filing: **24.10.2025**

(51) International Patent Classification (IPC):
    ***G01S 13/42*** *(2006.01)*    ***G01S 13/87*** *(2006.01)*
    ***G01S 13/931*** *(2020.01)*

(52) Cooperative Patent Classification (CPC):
    **G01S 13/878; G01S 13/42;** G01S 13/931

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH LA MA MD TN**

(30) Priority: **30.10.2024  US 202418932354**

(71) Applicant: **NXP B.V.**
    **5656 AG Eindhoven (NL)**

(72) Inventors:
    • **Sari, Alp**
      **5656AG Eindhoven (NL)**

    • **Kaneko, Takeshi**
      **5656AG Eindhoven (NL)**
    • **Chan, Lu Lu**
      **5656AG Eindhoven (NL)**
    • **Gehrels, Cornelis**
      **5656AG Eindhoven (NL)**
    • **Kusters, Frank Johannes Marie**
      **5656AG Eindhoven (NL)**
    • **Koppelaar, Arie Geert Cornelis**
      **5656AG Eindhoven (NL)**

(74) Representative: **Colaiuda, Antonella**
    **NXP Semiconductors Germany GmbH**
    **Intellectual Property Group**
    **Beiersdorfstraße 12**
    **22529 Hamburg (DE)**

(54)  **MULTI-RADAR JOINT DETECTION SYSTEM**

(57)  A radar system and method include a first dataset received from a first radar device. The first dataset includes a data peak associated with a first object, wherein the data peak is associated with a range value and a direction of arrival value expressed in a first coordinate space. A second dataset is received from a second radar device, wherein the second dataset includes values associated with range values and direction of arrival values expressed in a second coordinate space. The second dataset is modified using a coordinate transformation function to generate a third dataset including second values associated with range values and direction of arrival values expressed in the first coordinate space. The third dataset is processed to determine that the second peak is associated with a valid detection of the first object.

FIG. 2

EP 4 737 946 A1

**Description**

<u>FIELD</u>

The present disclosure generally relates to automotive radar systems and, more specifically, to an automotive radar system that includes multiple individual radar devices configured to detect objects in a vicinity of a vehicle.

<u>BACKGROUND</u>

A radar system, such as automotive radar system that may be used in civil automotive applications, transmits an electromagnetic signal and receives back reflections of the transmitted signal. The time delay between the transmitted and received signals can be determined and used to calculate the distance and/or the speed of objects causing the reflections. For example, in automotive applications, automotive radar systems can be used to determine the distance and/or the speed of oncoming vehicles and other obstacles.

Automotive radar systems enable the implementation of advanced driver-assistance system (ADAS) functions that are likely to enable increasingly safe driving and, eventually, fully autonomous driving platforms. Such systems can rely on the output data of an automotive radar system to provide various driver assistance functions, such as aiding in vehicle collision avoidance.

The effectiveness of an automotive radar system is largely dependent upon the system's ability to accurately detect objects with a relatively small number of false positives (i.e., falsely determining that an object is present in the vicinity of the vehicle) and false negatives (i.e., failing to detect an object). As such, in automotive radar applications, it is generally desirable to maximize the probability of detecting objects, while minimizing false object detections. In an automotive radar application, failing to detect an object could lead to poor performance of a vehicle's ADAS.

<u>SUMMARY</u>

This summary section is neither intended to be, nor should be, construed as being representative of the full extent and scope of the present disclosure. Additional benefits, features and embodiments of the present disclosure are set forth in the attached figures and in the description hereinbelow, and as described by the claims. Accordingly, it should be understood that this Summary section may not contain all of the aspects and embodiments claimed herein.

Additionally, the disclosure herein is not meant to be limiting or restrictive in any manner. Moreover, the present disclosure is intended to provide an understanding to those of ordinary skill in the art of one or more representative embodiments supporting the claims. Thus, it is important that the claims be regarded as having a scope including constructions of various features of the present disclosure insofar as they do not depart from the scope of the methods and apparatuses consistent with the present disclosure (including the originally filed claims). Moreover, the present disclosure is intended to encompass and include obvious improvements and modifications of the present disclosure.

In some aspects, the techniques described herein relate to a system, including: a first radar device, including: a first plurality of transmitter modules configured to transmit a first plurality of transmitted radar signals, a first plurality of receiver modules configured to receive first reflections of the first plurality of transmitted radar signals and to generate first signals based on the first received reflections, and a first processor configured to process the first signals to generate a first dataset that includes a first two-dimensional data frame, wherein the first two-dimensional data frame includes a first data peak associated with a first object associated with a first range value and a first direction of arrival value expressed in a first coordinate space relative to a location of the first radar device; a second radar device, including: a second plurality of transmitter modules configured to transmit a second plurality of transmitted radar signals, a second plurality of receiver modules configured to receive second reflections of the second plurality of transmitted radar signals and to generate second signals based on the second received reflections, and a second processor configured to process the second signals to generate a second dataset that includes first values expressed in a second coordinate space relative to a location of the second radar device; and a third processor configured to: receive the first dataset from the first radar device; receive the second dataset from the second radar device; modify the second dataset using a coordinate transformation function to generate a third dataset, wherein the third dataset includes second values expressed in the first coordinate space; process the third dataset using a constant false alarm rate algorithm to identify a second data peak associated with a second range value and a second direction of arrival; and determining, by comparing the second direction of arrival value to the first direction of arrival value, that the second data peak is associated with a valid detection of the first object.

In some aspects, the techniques described herein relate to a system, including: a first radar device configured to process first received signals using a constant false alarm rate algorithm using a first detection threshold to generate a first dataset that includes a data peak associated with a first object, wherein the data peak is associated with a range value and a direction of arrival value expressed in a first coordinate space; a second radar device configured to process second received signals using the constant false alarm rate algorithm using the first detection threshold to generate a second dataset including first values associated with range values and direction of arrival values expressed in a second coordinate space; and a processor configured to: receive the first dataset from the first radar device, receive the second dataset from the second radar device, modify the second dataset using a coordinate transformation function to generate a third dataset including second values associated with range values and direction of arrival values expressed in the first coordinate space, and process the third dataset using a constant false alarm rate algorithm using a second detection threshold to determine that a second data peak is present within the third dataset at the range value and the direction of arrival value to determine that the second peak is associated with a valid detection of the first object, wherein the second detection threshold is less than the first detection threshold.

In some aspects, the techniques described herein relate to a method, including: receiving a first dataset from a first radar device, wherein the first dataset includes a data peak associated with a first object, wherein the data peak is associated with a range value and a direction of arrival value expressed in a first coordinate space; receiving a second dataset from a second radar device, wherein the second dataset includes values associated with range values and direction of arrival values expressed in a second coordinate space; modifying the second dataset using a coordinate transformation function to generate a third dataset including second values associated with range values and direction of arrival values expressed in the first coordinate space; and processing the third dataset to determine that a second data peak is present within the third dataset at the range value and the direction of arrival value to determine that the second peak is associated with a valid detection of the first object.

## BRIEF DESCRIPTION OF THE DRAWINGS

The accompanying drawings, which are included to provide a further understanding of the disclosure and are incorporated in and constitute a part of this specification, illustrate embodiments of the disclosure and together with the description serve to explain the principles of the disclosure.

In the drawings:

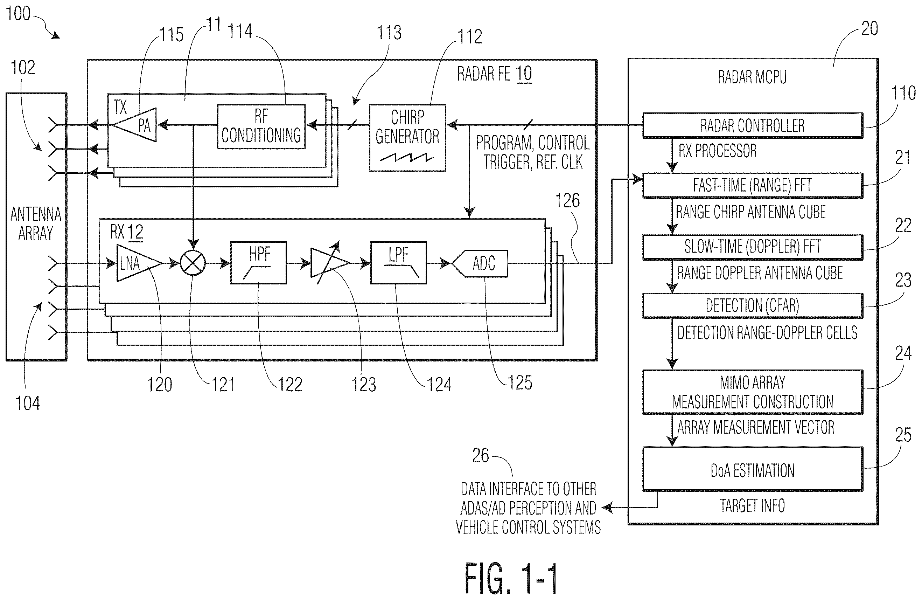

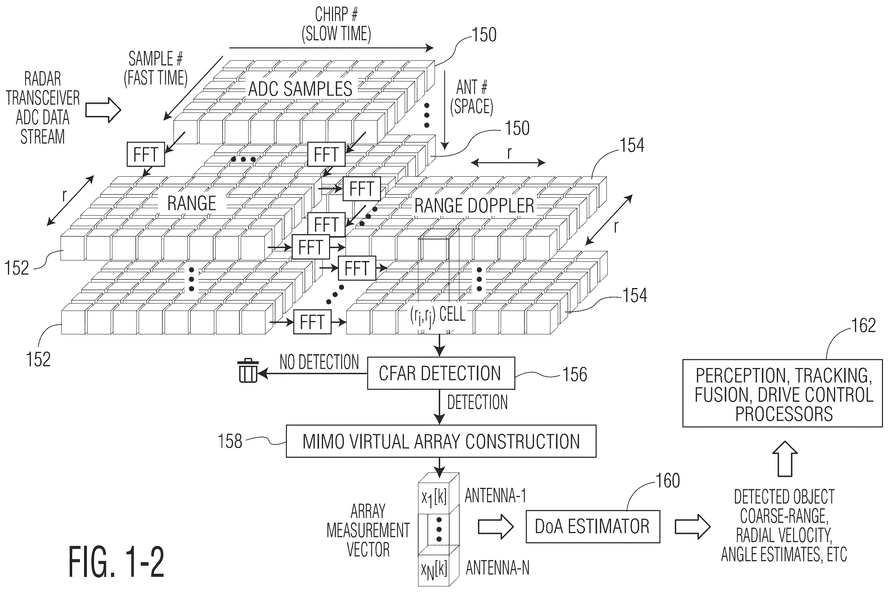

FIG. 1-1 depicts a simplified schematic block diagram of an automotive radar device 100 that includes a radar unit connected to a radar controller processor.
FIG. 1-2 graphically depicts, at a high-level, the processing steps that may be implemented by the processor of the radar device of FIG. 1-1 to process digital signals.
FIG. 2 is a simplified schematic block diagram of a radar system that includes dual individual radar devices configured in accordance with the present disclosure.
FIG. 3 is a block diagram depicting additional detail of the sensor exchange block of FIG. 2.
FIG. 4 depicts a basic vehicle having the two radar devices, each at known locations with respect to a location of the vehicle.
FIG. 5 depicts two example frames of radar data generated by a first radar device and a second radar device.
FIG. 6 is a chart depicting an example dataset represented that may be processed by an enhanced CFAR data processing block using a reduced CFAR threshold.

## DETAILED DESCRIPTION OF THE ILLUSTRATED EMBODIMENTS

The present disclosure generally relates to automotive radar systems and, more specifically, to an automotive radar system that includes multiple individual radar devices configured to detect objects in a vicinity of a vehicle.

During normal operations, an automotive radar system transmits electromagnetic signals into a region of interest and receives back reflections of those transmitted signals. The reflections are received at one or more antennas and are processed via a signal processing system to generate output data. The data output by the signal processing system of such a radar system may include, for example, a point cloud that identifies the locations of objects relative to the radar system. In automotive applications, therefore, the point cloud can represent the locations of objects in the vicinity of a vehicle. The data can then be used by various vehicles subsystems (e.g., an advanced driver-assistance system (ADAS)) to provide various notifications to a driver of the vehicle, or to enable direct control of one or more vehicle subsystems (e.g., braking and steering systems).

In many such systems, the point cloud generated by the automotive radar system may also indicate, for each detected object, a probability associated with each object detection, which indicates a confidence level with which the object at that location was detected. An object, for example, that has high signal reflectivity properties (e.g., a high radar cross-section) may reflect a strong signal such that the object can be detected with a high confidence level. Other objects, however, that reflect lower power signals closer with magnitudes closer to an ambient noise level (e.g., objects with a small radar cross-section or objects that absorb some of the transmitted signals) may be detected, but with lower confidence. Furthermore, some objects, whose reflection signals have magnitudes that fall below a predefined noise level of the radar system may not be detected at all, leading to poor performance of the automotive radar system and, in some circumstances, a risk of collision.

A radar system may fail to detect a particular object for a number of other reasons, too. For example, an object may not be detected if the object is too far away and the received signal has a low signal-to-noise (SNR) ratio, if the object is near an edge of the radar system's field of vision (FOV) in which the system's antenna gain and sensitivity is low compared to other regions of the FOV, issues with the radar system's hardware or calibration, or the observed angle to the object is such that the reflected signal interferes with itself destructively, or if an object is occluded by another object.

To remedy some of the problems, the present disclosure provides a radar system that includes multiple individual radar devices. The individual radar devices are configured to transmit, receive and process their own respective signals independently of one another. Then, the various outputs of each individual radar device used in combination, as provided herein, so that the resulting output of the entire radar system is more likely to detect objects that may have been missed or incorrectly classified by the individual radar devices.

In this manner, the present radar system can improve the accuracy of detected objects and increase the likelihood of detecting smaller objects with low-power reflected signals. In some configurations, the FOVs of each individual radar device can be overlapped to mitigate problems with poor object detection at the edges of a radar device's FOV. Additionally, the multiple radar devices can serve as backups for one another such that if one radar device suffers from hardware deficiencies or improper calibration the other radar devices can compensate.

As such, the present disclosure provides an automotive radar system that utilizes two or more individual radar devices that may have overlapping FOVs. The output signals (e.g., the point clouds) of each individual radar device can be transformed into regions of interest (ROIs) on the other radar device's point clouds to execute a joint object detection algorithm, as described herein.

To illustrate the design and operation of a single vehicle radar device that may be incorporated into the radar system of the present disclosure, reference is now made to FIG. 1A which depicts a simplified schematic block diagram of an automotive radar device 100 that includes a radar unit 10 connected to a radar controller processor 20. In selected embodiments, the radar unit 10 may be embodied as a line-replaceable unit (LRU) or modular component that is designed to be replaced quickly at an operating location. Similarly, the radar controller processor 20 may be embodied as a line-replaceable unit (LRU) or modular component. Radar device 100 may be implemented in integrated circuit form with the radar unit 10 and the radar controller processor 20 formed with separate integrated circuits (chips) or with a single chip, depending on the application.

Within radar device 100 each radar unit 10 includes one or more transmitting antenna elements 102 and receiving antenna elements 104 connected, respectively, to one or more radio frequency (RF) transmitter (TX) units 11 and receiver (RX) units 12. For example, each radar unit 10 is shown as including individual antenna elements 102, 104 (e.g., TX1,i, RX1,j) connected, respectively, to three transmitter modules 11 and four receiver modules 12, but these numbers are not limiting and other numbers are also possible, such as four transmitter modules 11 and six receiver modules 12, or a single transmitter module 11 and/or a single receiver module 12.

Each radar unit 10 also includes a chirp generator 112 that is configured and connected to supply a chirp input signal to the transmitter modules 11. To this end, the chirp generator 112 is connected to receive a separate and independent local oscillator (LO) signal and a chirp start trigger signal. The operation of transmitter modules 11 may be controlled by a controller 110 that may be implemented, in whole or in part, by processor 20. Chirp signals 113 are generated and transmitted to transmitter modules 11, usually following a pre-defined transmission schedule, where the chirp signals 113 are filtered at the RF conditioning module 114 and amplified at the power amplifier 115 before being fed to the corresponding transmit antenna 102 (TX1,i) and radiated.

The radar signal transmitted by the transmitter antenna elements 102 (TX1,i, TX2,i) may be reflected by an object, and part of the reflected radar signal reaches the receiver antenna elements 104 (RX1,i) at radar unit 10. At each receiver module 12, the received radio frequency antenna signal is amplified by a low noise amplifier (LNA) 120 and then fed to a mixer 121 where the received signal is mixed with the transmitted chirp signal generated by the RF conditioning module 114. The resulting intermediate frequency signal is fed to a first high-pass filter (HPF) 122. The resulting filtered signal is fed to a first variable gain amplifier 123 which amplifies the signal before feeding it to a first low pass filter (LPF) 124. This re-filtered signal is fed to an analog/digital converter (ADC) 125 and is output by each receiver module 12 as a digital signal 126 (D1). The receiver module compresses object signals echoes of various delays into multiple sinusoidal tones whose frequencies correspond to the round-trip delay of the echo signal.

Radar device 100 includes radar controller processing unit 20 that is connected to supply input control signals to the radar device 10 (e.g., via controller 110) and to receive therefrom digital output signals (e.g., digital signal 126) generated by the receiver modules 12.

In selected embodiments, the radar controller processing unit 20 may be embodied as a micro-controller unit (MCU) or other processing unit that is configured and arranged for signal processing tasks such as, but not limited to, object identification, computation of object distance, object velocity, and object direction, and generating control signals. The radar controller processing unit 20 may, for example, be configured to generate calibration signals, receive data signals, receive sensor signals, generate frequency spectrum shaping signals (such as ramp generation in the case of FMCW radar) and/or register programming or state machine signals for RF (radio frequency) circuit enablement sequences. In addition, the radar controller processor 20 may be configured to program the transmitter modules 11 to operate in a time-division fashion by sequentially transmitting chirps for coordinated communication between the transmit antenna elements 102 TX1,i, RX1,j.

Radar controller processor 20 is configured to process digital signal 126 to ultimately identify a distance to objects as well as an angular position and velocity of those objects with respect to radar device 100. These data points can be output in the form of a point cloud, which identifies, in a three-dimensional space, the distance to detected objects, the radial velocity of detected objects, as well as a confidence level for each object detection. Typically, digital signal 126 includes a sequence of digital values representing magnitudes of radar signals received by receiving antenna elements 104 captured over time. Typically, each digital value is associated with a particular chirp number and sample number.

FIG. 1-1 shows the series of signal processing steps that are implemented by processor 20 in order to properly process digital signal 126 received from radar unit 10 to identify potential nearby objects. To complement FIG. 1-1, FIG. 1-2 graphically depicts, at a high-level, the processing steps that may be implemented by processor 20 to process digital signals 126.

In particular, the content of digital signals 126 is made up of a series of data frames that include a number of digital sample values (e.g., captured by ADCs 125 of receiver units 12) where the sample values are arranged in a two-dimensional matrix that is generated based upon a sequence of pulsed signals. The data structure making up a single captured frame is depicted by matrix 150 in FIG. 1-2. As depicted, a single frames-worth of data in matrix 150 includes a two-dimensional matrix with a first dimension that is referred to as the "fast time" dimension and represents data values that were captured from the different pulsed signals. The second dimension of matrix 150 is referred to as the "slow time" dimension and represents data values that were captured in response to the different chirp signals that may be included within a particular pulsed signal that was transmitted by transmitter modules 11. As shown in FIG. 1-2, signal processing may involve processing multiple frames of data represented by the several matrixes 150. In the present disclosure, that may involve processing individual frames of data, as described herein, to identify sets of peak values within the frames. Or, alternatively and as described herein, this may involve processing different subsections of the ADC data stream to identify sets of candidate peak values, which are ultimately combined across an entire radar cube to perform final peak detection. Typically, during such signal processing, frames of data represented by a matrix 150 are captured for each receive channel. As such, FIG. 1-2 depicts multiple matrixes 150 that are each associated with a different receive channel and may be received as input data to the signal processing chain.

For subsections of radar cube data that may comprise data represented by matrix 150, radar controller processor 20 initially performs a fast-time range Fast Fourier transform (FFT) 21 (FIG. 1-1) to generate new frame data represented by matrix 152. The FFT 21 is executed on the 1-D arrays of data (i.e., the signal) associated with each distinct chirp in the original input matrix 150 to generate a 1-D transformed signal of the same length. The FFTs of each chirp in the original input frame represented by matrix 150 are combined to generate the transformed frame as indicated by matrix 152. This process is repeated for each frame associated with each receive channel. The resulting data frames, which represent range maps, are represented in FIG. 1-2 as matrixes 152 and can be used to determine distance to particular objects as reflected in the range maps.

In a next, step radar controller processor 20 performs an additional Fast Fourier Transform (FFT) 22 (FIG. 1-1) (referred to as the slow-time or Doppler-FFT) on the range maps to generate a new range-Doppler frame data represented by matrixes 154. In this step, however, FFT 22 is applied along the opposite dimension from the FFT 21. As such, the FFT 22 is executed on the 1-D arrays of data (i.e., the signal) in matrixes 152 associated with each range bin in the matrix 152 to generate a transformed 1-D signal of the same length. The FFTs of each signal in the frames of matrixes 152 are combined to generate the range-Doppler data frames as indicated by matrixes 154. This process is repeated for each frame associated with each receive channel. The range-Doppler data frames associated with matrixes 154 provide information about the movement of a potential object over time from one sample number to the next. With the data frames associated with matrixes 154 generated, it is possible to process the data encoded therein to begin identifying potential objects and, in the case of a detected object, determine its velocity and direction of arrival.

Accordingly, the radar controller processor 20 performs constant false alarm rate (CFAR) object detection 23 (FIG. 1-1), 156 (FIG. 1-2).

If a potential object has been detected, radar controller processor 20 performs multiple-input multiple-output (MIMO) array measurement construction 24 (FIG. 1-1), 158 (FIG. 1-2) to determine the direction of arrival (DOA) for each object 25 (FIG. 1-1), 160 (FIG. 1-2). The final object information dataset, which may include an object identifier, DOA, and other related information (e.g., object velocity) is then passed by radar controller processor 20 (in step 26, FIG. 1-1, 162, FIG. 1-2) to an ADAS or other system configured to utilize the object information to control one or more vehicle system.

In the present radar system, instead of relying upon a single radar device 100, multiple radar devices 100 are combined into a single radar system that utilizes the object detection data from each individual radar device 100 to improve overall object detection and mitigate edge-of-FOV object detection accuracy in individual radar devices. In particular, the present radar system implements a joint detection approach using data from multiple individual radar devices 100 having overlapping FOVs.

In the conventional signal processing chain described above, the analog signals captured by a single radar device are processed into digital output signals that are further manipulated to generate a dataset (e.g., a point cloud) including discrete object detection information (e.g., range, DOA, and velocity). If the magnitude of the signal being processed falls below a particular threshold, that likely indicates that no reflection object is present at the corresponding location and that portion of the signal can be discarded. As explained herein, however, those discarded signals may, in some cases, be wasted useful data. As such, the present radar system uses the prior knowledge of the potential existence of objects detected by one radar device (e.g., object detects with a low confidence interval) to recover object detections in the noisy analog signal captured by another radar device that may otherwise have been discarded as useless noise. As such, this joint detection approach effectively "fuses" the output data of multiple radar devices at the radar cube data level to improve object detection across all radar devices.

In describing the technological benefits of the present invention, this process of multi-radar device objection detection may be summarized as follows. In general, a radar device will detect an object with a detection probability $P_D$ and will miss detecting that same object with a probability $(1 - P_D)$. In the present radar system, if implemented with dual individual radar devices, for example, the performance of the dual-radar system has four possible outcomes:

d/d: The first radar device detects an object and the second radar device detects the object.
d/m: The first radar device detects an object but the second radar device misdetects (i.e., fails to detect) the object.
m/d: The first radar device misdetects the object but the second radar device detects the object.
m/m: Both radar devices misdetect the same object.

The present radar system, as described herein, executes a signal processing pipeline that may convert some d/m and m/d outcomes (when one radar device detects an object, but the object is missed by the other radar device) into d/d outcomes (when both radar devices detect the object).

Consequently, the present radar system may increase the number of detections and provide more information as compared to conventional automotive radar signal processing approaches. Additionally, a novel direction of arrival (DOA) validation method (which determines an angle between the automotive radar system and the detected object) may provide that false positive detections are minimized.

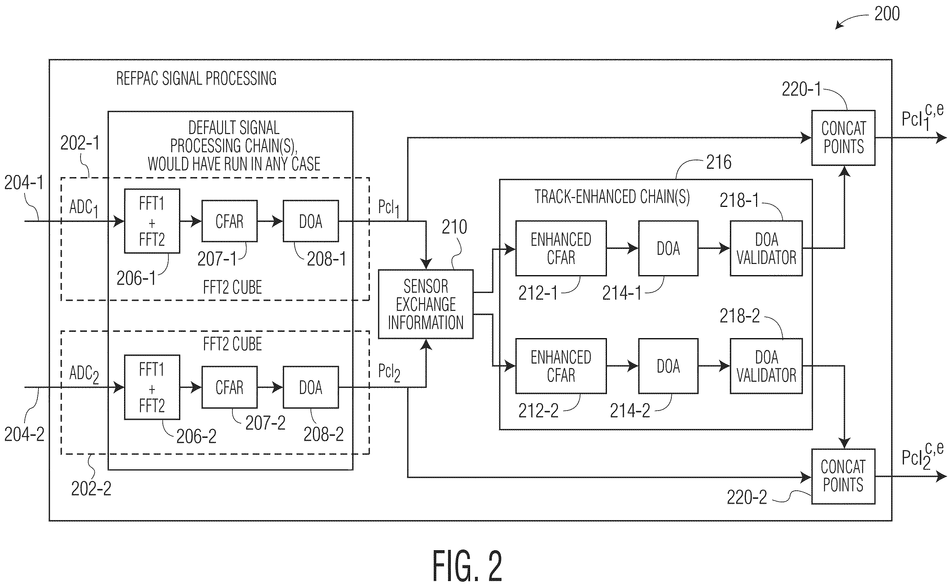

FIG. 2 is a simplified schematic block diagram of radar system 200 or radar system signal processor that includes signal processing chains for dual individual radar devices 202-1 and 202-2 (collectively, radar devices 202) configured in accordance with the present disclosure. Although simplified in FIG. 2 such that only a subset of each radar device 202's components are shown, each radar device 202 may be configured similarly to radar device 100 of FIG. 1-1.

Accordingly, each radar device 202 includes an input terminal 204-1, 204-2 configured to receive input digital signals $ADC_1$, $ADC_2$, respectively, that are equivalent to the signals received by each radar device 202's antenna (not shown). The signals $ADC_1$ and $ADC_2$ may be generated, for example, by each radar device 202's ADC (e.g., ADC 125 of radar device 100 of FIG. 1-1).

Within each radar device 202, the received digital signals are processed through a signal processing pipeline that includes FFT blocks 206-1, 206-2 (collectively FFT blocks 206), which are configured to perform range and Doppler FFTs on the received signals $ADC_1$, $ADC_2$, respectively. FFT blocks 206-1, 206-2 are equivalent to fast-time (range) FFT 21 and slow-time (Doppler) FFT 22 of radar device 100 of FIG. 1-1.

Once processed, the datasets generated by each FFT block 206-1, 206-2 (e.g., analogous to matrixes 154 of FIG. 1-2) are processed through CFAR blocks 207a, 207b (e.g., CFAR detection 23 of radar device 100 of FIG. 1-1), and DOA estimation blocks 208a, 208-2 (e.g., DOA estimation block 25 of radar device 100 of FIG. 1-1).

The outputs of DOA estimation blocks 208a, 208-2 or radar devices 202-1, 202-2, therefore are datasets including the point clouds $Pcl_1$ and $Pcl_2$ generated by each radar device 202 running independently. As discussed above each point cloud $Pcl_1$, $Pcl_2$ includes, for the various objects detected by each respective radar device 100, an identification of the object, its relative velocity, its DOA (relative to the radar system that detected the object), and, potentially, additional data describing the object as ascertained by the radar device 100.

In a particular example, if radar devices 202 are MIMO radar devices configured with $N$ virtual receivers, for example, the radar devices 202 generate $N$ channels of ADC data (i.e., signals $ADC_1$ and $ADC_2$). In that case, the FFT operations implemented by FFT blocks 206 are implemented on the ADC data from each of those $N$ channels. Specifically, within each FFT block 206, a first FFT1 takes the FFT along the range bins of each channel and a second FFT2 takes the FFT along the Doppler bins of each channel. The outputs of FFT blocks 206 therefore are $N$ 2-dimensional complex matrices having range and Doppler (radial velocity) dimensions. These matrices may be referred to herein as datasets including the 'spectrum' and the set of $N$ spectra represent the 'data cube' generated by FFT blocks 206 for a particular radar device 202.

Within those spectrum datasets, an object detection appears within the spectrum as a peak value amongst other data values at a particular range and Doppler velocity (e.g., radial velocity) value that is associated with that particular detection. To detect peaks (also referred to as "data peaks"), the outputs of FFT blocks 206 are provided as inputs, respectively, to CFAR blocks 207a, 207b (described in more detail below) to process the input data using a CFAR detection algorithm to detect peaks in the range-Doppler input data to identify potential detected objects.

At each peak identified by enhanced CFAR blocks 212-1, 212-2, the set of $N$ complex values associated with the peak locations from each channel is called the 'snapshot' for that peak location. The relative phases between the channels in a snapshot are used, in turn, by DOA blocks 208a, 208-2 (e.g., DOA estimation block 25 of radar device 100 of FIG. 1-1) to determine the DOA of each peak (i.e., detected object). Conventional DOA algorithms can be applied to estimate the direction of arrival of the signal in azimuth (and elevation, if available). The DOA algorithm can determine the number of objects at the same range-Doppler bin and their respective DOAs.

Within FIG. 2, blocks 206, 208, 210 operate independently within each radar device 202 in a manner largely unchanged from the single radar device 100 configuration of FIG. 1-1. Within radar system 200, however, as described below, additional functional components are provided and described to enable the radar device 202-1 and radar device 202-2 to operate in conjunction as a multi-radar device radar system.

As such, the datasets $Pcl_1$ and $Pcl_2$ output by DOA blocks 208 of each radar device 202 are used in combination by sensor exchange block 210 so that the point cloud $Pcl_1$ generated by radar device 202-1 is made available to the signal processing system analyzing radar device 202-2 output data and, conversely, the point cloud $Pcl_2$ generated by radar device 202-2 is made available to the signal processing system processing the output data of radar device 202-1.

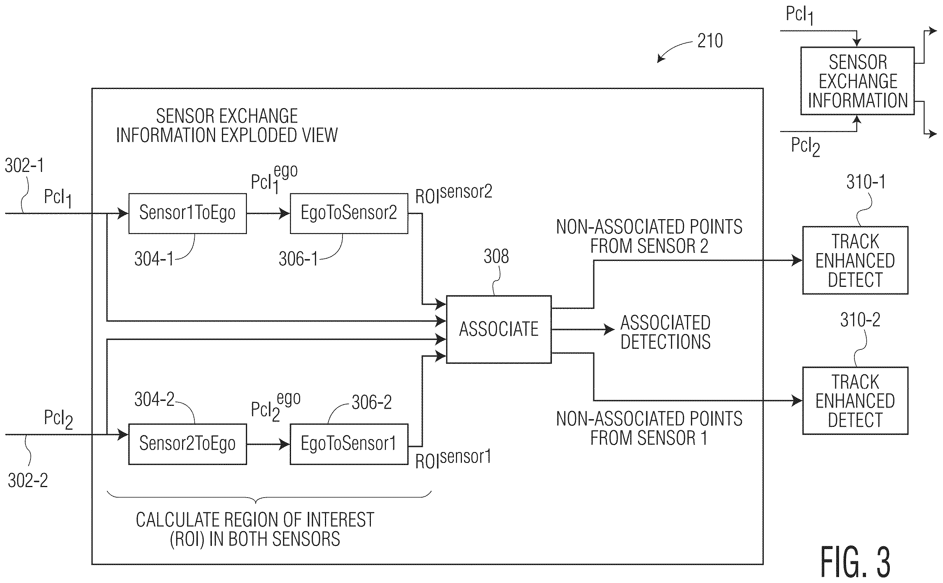

To illustrate, FIG. 3 is a block diagram depicting additional detail of sensor exchange block 210 of FIG. 2. A first function of sensor exchange block 210 is to implement a translation of the data received from each radar device 202 enabling the data to be properly combined and processed. Specifically, because the output dataset of each radar device 202 includes point cloud data generated by each radar device 202, the point cloud data is expressed in the form of polar coordinates having origins set at the location of the respective radar device 202 antenna. Consequently, the data received from each radar device 202 must be translated within a particular coordinate space to be expressed in the same frame of reference (e.g., with the same origin point) enabling the data to be combined into a single useable dataset in a single consistent coordinate space. Accordingly, datasets received from a first radar device 202-1 by sensor exchange block 210 (and, particularly, the data associated with the overlapping regions of the FOVs of each radar device) are converted from the polar coordinate space of the first radar device 202-1 into the polar coordinate space of the second radar device 202-2 using a coordinate transformation function. The converse is true, as the data received from the second radar device 202-2 is converted via the coordinate transformation function into the polar coordinate space of the first radar device 202-1.

As illustrated by FIG. 3, these coordinate space conversions can be performed in two steps. First, the point cloud ($Pcl_1$) received from the first radar device 202-1 at input terminal 302-1, which is expressed in terms of that radar device's coordinate space, is transformed, by block 304-1 into a general or "ego" coordinate system. The ego coordinate system could be expressed, for example, by a coordinate system in which a center of the vehicle is determined to be the origin point of the polar coordinate system.

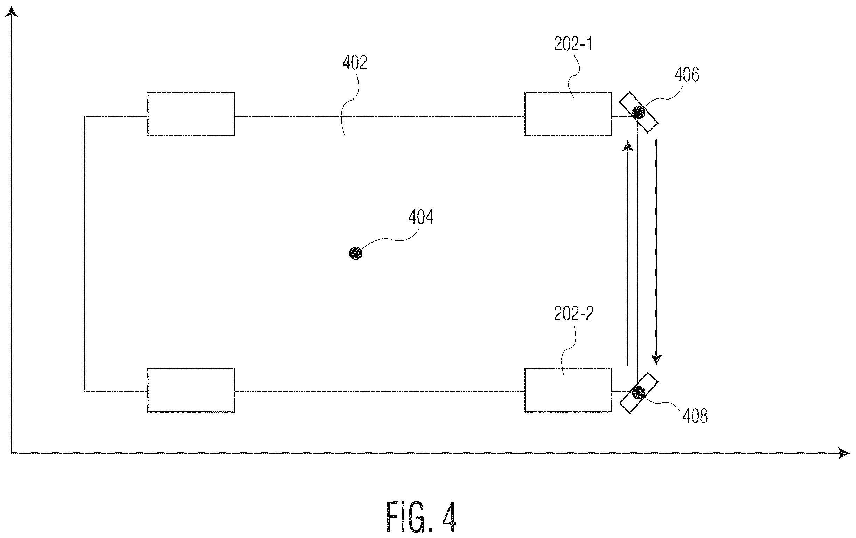

To illustrate these different coordinate spaces, FIG. 4 depicts a basic vehicle 402 having the two radar devices 202-1 and 202-2. A location of vehicle 402 (indicated by origin point 404) can be defined on an X-Y axis as an origin point for an ego coordinate system. Additionally, each radar device 202 has a known location that is used to determine its own origin point (i.e., origin point 406 for radar device 202-1 and origin point 408 for radar device 202-2). The relative locations of objects in the vicinity can therefore be expressed using polar coordinates relative to any of these origin points - origin point 406 for radar device 202-1's polar coordinate system, origin point 408 for radar device 202-2'a polar coordinate system, and origin point 404 for vehicle 402's polar coordinate system, which may be considered the ego coordinate system for the radar system.

Returning to FIG. 3, once transformed into the ego coordinate system, block 306-1 transforms the point cloud into the coordinate system associated with the second radar device 202-2. As detailed above, this conversion may only be performed on only a subset of data elements of the original point cloud data (i.e., $Pcl_1$) that fall within the FOV of the second radar device 202-2.

In a similar manner, the point cloud ($Pcl_2$) received from the second radar device 202-2 at input terminal 302-2, which is expressed in terms of that radar device's coordinate space, is transformed, by block 304-2 into the same ego coordinate system. Once transformed into the ego coordinate system, block 306-2 transforms the point cloud into the coordinate system associated with the second radar device 202-2. As detailed above, this conversion may only be performed on data elements of the original point cloud data (i.e., $Pcl_2$) that fall within the FOV of the first radar device 202-1.

In various implementations, the transformations of the various point cloud datasets into the different coordinate spaces may involve transformation of range, azimuth (and optionally elevation) data elements from the one radar device's point cloud into the coordinate system of the other radar device.

Additionally, this transformation process may involve a transformation of the radial velocity of one point cloud dataset into an expected radial velocity in another coordinate space, as would have been observed by the other radar device, this may be more difficult than a simple transformation of the location data between the various radar devices may only measure a single component of the velocity vector. That is, the radar devices may not measure or determine the tangential velocity components in the azimuthal and elevation directions. As such, one approach for performing transformation of the velocity data from one coordinate space to another may involve the assumption that the tangential velocity components in the first radar's frame are zero. This can introduce a bias or error into the translated velocity data but in typical applications this bias or error is generally negligible in the far field (i.e. when the ratio of the range to the baseline is relatively large).

As mentioned above, the point cloud data being processed by sensor exchange block 210 may include confidence data for each peak identified in the point cloud dataset. During processing, therefore, sensor exchange block 210 may be configured to represent the confidence data for each detected peak using a covariance matrix. For the confidence values associated with the tangential velocity components, sensor exchange block 210 is configured assuming a reasonable maximum range based on experimentation. Once determined, the covariance matrices are transformed between radar device coordinate spaces. An example approach for such a transformation involves generating, first, a covariance matrix, which represents uncertainties of the measurements, in which each point in the covariance matrix is associated with a particular range-azimuth-elevation for the point cloud of radar device 202-1. The uncertainty is generated by sensor properties of components of radar device 202-1. In generating the covariance matrix, reasonable values are assumed for the tangential velocity components.

In a specific approach for generating the covariance matrix, the polar coordinates of a first point in the point cloud of radar device 202-1 may be designated as $z_1$. In that case, the corresponding point in the covariance matrix (i.e., in the frame of reference of radar device 202-2) may be defined as $\Sigma_{z1}$. In that case, the transform of the point is established as follows:

$$z_2 = cart2polar\left(\underbrace{R \cdot \underbrace{\left(polar2cart(z_1)\right)}_{z_{cart,1}} + t}_{z_{cart,2}}\right) \tag{1}$$

In expression (1), $z_2$ is the corresponding polar coordinate in radar device 202-2, $R$ is the rotation matrix, and $t$ is the translation vector between radar 1 and radar 2 frames. Overall expression (1) can be summarized as $z_2 = f(z_1)$ which is nonlinear due to transformations between polar and cartesian coordinate systems. If expression (1) were linear, such as $z_2 = A \cdot z_1$, the covariance matrix can be propagated exactly as $\Sigma_{z,2} = A \cdot \Sigma_{z,1} \cdot A^T$. The Jacobian matrix J of function f(.) is a matrix of partial derivatives that linearizes the nonlinear equation f(.) around a point. The covariance can then be propagated approximately as $\Sigma_{z,2} = J \cdot \Sigma_{z,1} \cdot J^T$. Because f(.) can be decomposed into linear operations (multiplication with $R$ and $t$), and nonlinear operations (polar2cart(.) and cart2polar(.) functions) in sequence, in practice it could be practicable to linearize only the nonlinear parts, and due to covariance matrix propagation, in two or more distinct steps.

Once the data received from each radar device 202 has been translated as described above, the resulting datasets can be associated (e.g., combined into a single dataset) in association block 308 and further enhanced object detection analysis can be performed, as described below by track enhanced direct blocks 310-1 and 310-2.

During the processing of sensor exchange block 210 and described above, it is anticipated that these transformations between coordinate spaces may increase detection uncertainty in the nearfield. However, such uncertainty, as mentioned above, is reduced in the far field. For this reason, in some applications, the present multi-radar-enhanced object detection scheme may only be utilized reliably for the far field (e.g., at distances of several times the distance between radar devices, such as three or greater) object detections. Coincidentally, it is these far field object detections in which the probability of object detections tends to be the lowest (as compared to near field detections) so even with this constraint, the present multi-radar object detection approach can be of significant benefit to automotive radar systems.

With the data generated by each radar device 202 converted between coordinate spaces, as described above, it is possible to use the data of one radar device (e.g., radar device 202-1) to detect potential misdetections in the data generated by the other radar device (e.g., radar device 202-2). In other words, the data identifying object detections (e.g., peaks) in the point cloud data generated by the first radar device can be used to increase the likelihood of identifying corresponding object detections or true peaks (that were otherwise missed) in the data from the second radar's detections, and vice versa. Specifically, data processing in blocks 304, 306, and 308 transform the object detection data from the first radar device's point cloud data to the second radar device's data and coordinate system along with object detection confidence levels, and vice-versa. The data that was transformed was taken from particular regions of interest (ROI) in the data that represent geometrical areas of volumes that were directly observed by each radar device (e.g., where the FOVs of the radar devices overlap). In various implementations, the ROIs are determined by the propagated covariance matrix $\Sigma$ (described above) which inherently describes an ellipse in radar range-Doppler point cloud space. The location of the ellipse can be utilized to define the ROI.

As such, within association block 308, for the data in the version of the first radar device's point cloud data that has been translated into the second radar device's coordinate space, sensor exchange block 210 is configured to identify detections (i.e., peaks) at locations in the transformed first radar device's data that do not correspond to detected peaks in the second radar device's dataset at the same location. Similarly, the opposite operation is performed to identify peaks at locations in the transformed second radar device's data that do not correspond to detected peaks in the first radar device's dataset at the same location.

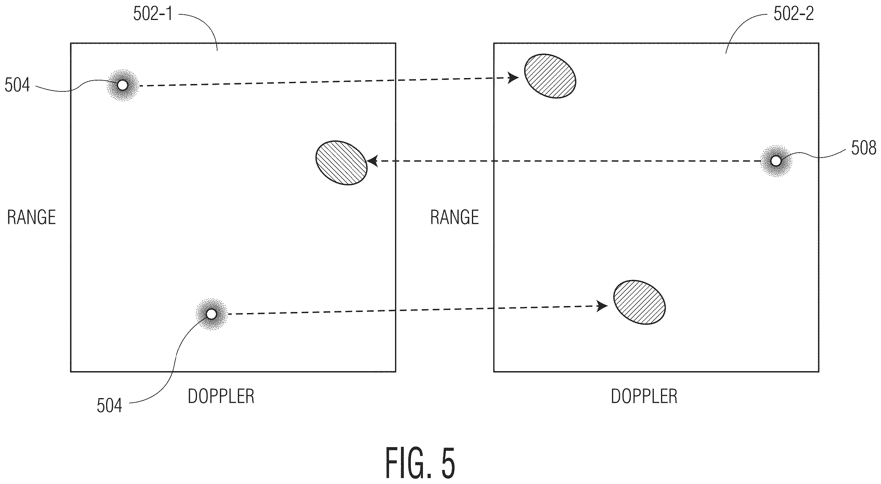

The result of this analysis results in a set of peaks that were detected by one radar device, but not the other (e.g., a d/m or m/d misdetection, as described above). To illustrate this process, FIG. 5 depicts two example frames of radar data generated by first radar device 202-1 (frame 502-1) and second radar device 202-2 (frame 502-2). As illustrated, first radar device 202-1 detected two potential objects indicated by peaks 504 at given range and Doppler locations. However, in frame 502-2, those peaks 504 are missing or otherwise undetected indicating that the objects associated with peaks 504 were not detected by second radar device 202-2.

Similarly, as indicated by FIG. 5, second radar device 202-2 detected one potential object peak indicated by peak 508 at the given range and Doppler location. However, in frame 502-1, peak 508 is missing indicating that the object associated with peak 508 was not detected by first radar device 202-1.

Returning to FIG. 3, this analysis results in the identification of a set of potential misdetections that represent particular locations (i.e., range-Doppler locations) in the output data of a radar device 202 that does not include a detected peak (i.e., potential object) that was detected by the other radar device 202. This set of potential misdetections is provided as an output of sensor exchange block 210 and as inputs into track enhanced detect blocks 310 (which, taken together, represent the track-enhanced data processing chain 216 of FIG. 2).

In addition to the set of misdetections, the output of sensor exchange block 210 may include an identification of peaks (i.e., potential objects) that were successfully identified and detected by both radar devices 202.

Returning to FIG. 3, just because the processing performed by sensor exchange block 210 may identify a misdetection in which a signal peak was detected by one radar device 202 and a similar peak was not found at the same location for another radar device 202, that does not necessarily mean that an object was properly detected by the first radar device and the second radar device failed to detect the object. The output could also be indicative of a false positive detection by the first radar device. False positives are undesirable as an output of radar system 200 as false positives could cause a vehicle system connected to radar system 200 to take unnecessary action (e.g., alerting a vehicle driver, applying vehicle brakes or steering inputs) in the false belief that an object is in the vicinity of the vehicle.

Accordingly, track-enhanced data processing chain 216 is configured to, as described below, recover potential object misdetections by a radar system 200 based on the output of sensor exchange block 210 whether the misdetection be a false negative (e.g., a missed object) or a false positive (e.g., a ghost object).

Referring to FIG. 3, therefore, for each potential misdetection received from sensor exchange block 210 (i.e., for each peak observed by one radar system that was not detected by the other radar system), misdetections associated with radar device 202-1 are passed to an enhanced CFAR block 212-1, described below, to identify potential misdetections by radar device 202-1. Similarly, for each potential misdetection received from sensor exchange block 210, misdetections associated with radar device 202-2 are passed to an enhanced CFAR block 212-2, described below, to identify potential misdetections by radar device 202-2.

Specifically, enhanced CFAR blocks 212-1, 212-2 are configured to perform CFAR analysis to detect peaks and potential objects in the outputs of their respective radar devices 202 using data from the other radar device 202, as described herein. The following discussion explains the operation of enhanced CFAR blocks 212-1, however it should be understood that enhanced CFAR blocks 212-2 operate in a substantially similar manner to enhanced CFAR blocks 212-1 to detect misdetections of radar device 202-2.

Specifically, for each potential misdetection by the first radar device 202-1, enhanced CFAR block 212-1 performs CFAR analysis of the point cloud ($Pcl_1$) of radar device 202-1 using a reduced CFAR threshold as compared to thresholds used in conventional automotive radar applications at the location of the potential misdetection. As described below, the reduced CFAR threshold may be at least partially determined by a probability or confidence value associated with the detections made by the first radar device 202-1. Any peaks detected in the point cloud of radar device 202-1 identified at the location of the potential misdetection using the reduced CFAR threshold represents a potential object that was not detected by radar device 202-1 when it performed conventional CFAR using a higher CFAR threshold. To increase the likelihood that peaks detected in the point cloud of radar device 202-1 are true peaks (i.e., associated with true objects and represent accurate object detections), the translated data received from the other radar device 202-2 is analyzed to determine whether radar device 202-2 also detected a peak at the same or a nearby location. If peaks are found in the data of both radar device 202-1 and 202-2 (where the radar device 202-1 point cloud is analyzed using a lower CFAR threshold at potential misdetection locations), that indicates a misdetection by radar device 202-1 and that an object should properly have been detected by both radar devices 202.

In implementing this algorithm, the reduced detection threshold that is used by enhanced CFAR blocks 212-1 to analyze the point cloud data generated by radar device 202-1 may be expressed as:

$$Thr_{new} = Thr_{default} - \alpha \cdot \frac{\Pr[object]}{\Pr[object] + \Pr[noise]} \tag{2}$$

Expression (2) represents the adapted CFAR threshold $Thr_{new}$ for a particular range gate. As such, expression (2) is used to develop different reduced CFAR thresholds for different ranges such that for a particular threshold range is fixed and the threshold is defined for each Doppler bin j, from 1 to $J$) Consequently, each bin $j$ actually represents a range of Doppler values $[d_{min,j}, d_{max,j}]$ that falls inside that bin. In that case, $Thr_{default}$ is denoted as $Thr_{default}[j]$ to distinguish between the threshold values for the different Doppler bins, similarly the object and noise probabilities are expressed as $Pr_{object}[j]$ and $Pr_{noise}[j]$.

Noise can be modeled as uniform. As such, $Pr_{noise}[j] = \frac{1}{J}$, i.e., with equal probability for all bins. $Pr_{object}[j]$ is the probability that the center of a detected object is inside that particular Doppler bin j, which is found by integrating the object probability density in that range gate $p_{object}(\tau)$ for that corresponding bin $j$, i.e., $Pr_{object}[j] = \int_{d_{min,j}}^{d_{max,j}} p_{object}(\tau) d\tau$. $p_{object}(\tau)$ is modelled as a Gaussian distribution, i.e. $p_{object}(\tau) = \mathcal{N}(\tau | \mu_d, \sigma_d^2)$, which is uniquely characterized with a mean value $\mu_d$ and variance $\sigma_d^2$. $\mu_d$ and $\sigma_d^2$ are a subset of the values that we obtained by propagating the points and the covariances from the other radar. $\alpha$ is a hyper-parameter that determines the maximum allowed decrease in the default threshold. The centroid of the Gaussian distribution is the mean parameter $\mu_d$ and the covariance described by the output of sensor exchange block 210, in which a uniform noise distribution over the velocity bins, i.e., Pr[*noise*] $\propto$ 1 may be presumed to be uniform. In calculating the reduced CFAR threshold $Thr_{new}$, the hyperparameter $\alpha$ is configured to control the scaling of the reduced threshold.

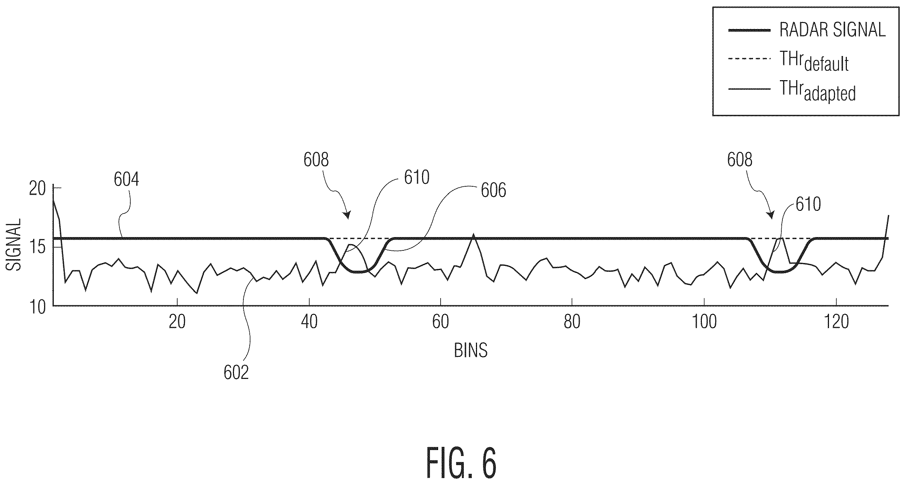

To illustrate how the reduced CFAR threshold can able the detection of true peaks that have otherwise been missed, FIG. 6 is a chart depicting an example dataset represented by trace 602 that may be processed by enhanced CFAR blocks 212-1 using a reduced CFAR threshold that is determined according to the approaches described above. In FIG. 6, the horizontal axis represents the Doppler bin of the dataset being processed and the vertical axis represents signal magnitude. During normal processing (e.g., at CFAR blocks 207) a conventional CFAR threshold (e.g., the straight, horizontal line 604) is utilized such that the CFAR threshold is unchanged from a predetermined default value across all bins. However, using the variable threshold determined by expression (2), above, during processing by enhanced CFAR blocks 212-1 and 212-2, the threshold can be reduced in certain ROIs (e.g., the regions in which targets were detected by the other radar device) , as indicated by line 606, which includes a pair of dips 608 indicating bins whose associated data are being processed using a CFAR algorithm with a reduced CFAR threshold. Using the reduced threshold, therefore, enhanced CFAR block 212-1 is able to detect peaks 610 in the data generated by radar device 202-1, that would otherwise have been obscured (and misdetected) due to level of noise surrounding those peaks. If those peaks align with peaks detected by the other radar system, that likely indicates a misdetection and a true object detection can be determined.

Having determined the new CFAR threshold, enhanced CFAR block 212-1 executes conventional CFAR processing on the data received from sensor exchange block 210. This reduced threshold enables the discovery of more objects (i.e., peaks) in the data generated by radar device 202-1 (which may have been ignored during normal processing), potentially leading to the discovery of objects that would have been missed if only the original data generated by radar device 202-1 was processed using conventional CFAR thresholds. With the reduced threshold, enhanced CFAR block 212-1 is likely to detect more peaks than conventional processing at a higher threshold.

The peaks (i.e., potential objects) detected by enhanced CFAR blocks 212-1 are then processed by DOA block 214 to determine DOAs for each of the potential objects.

With DOAs determined for each newly identified potential object, it may be desirable to implement a further process to confirm that the newly identified potential objects are correctly determined to be objects or whether they represent false positives resulting from the reduced CFAR detection threshold in the processing of data from radar device 202-1. To provide that confirmation a process is used to analyze the data from the other radar device 202-2 (that has been translated into the same coordinate space as that used by the first radar device 202-2) to determine whether the second radar device 202-2 also detected an object peak in the same location or at least within an ROI around the location of the potential object in the first radar device 202-1's point cloud. If both radar devices 202 observed a peak in the same or about the same location (e.g., within a certain DOA, such as within 2 degrees) then it can be determined that a true object was detected by both the first radar device 202-1 and the second radar device 202-2. If, however, if no such peak is found within the data of the second radar device 202-2 at or about the location of the candidate peak within the data of the first radar device 202-1, it may be determined that the peak in the first radar device 202-1 data is a false positive and may be discarded.

To implement this process, DOA validator block 218a is configured to determine whether the calculated DOAs for potential objects identified by enhanced CFAR blocks 212-1 are valid by determining whether each of the determined DOAs falls within a threshold number of degrees of an expected DOA, where the expected DOA is the DOA for the object that was translated from the other radar device's coordinate space. During CFAR processing, DOA information is not available and, as such, that processing step only relies on expected range and expected Doppler values to identify detections that were made by both radar devices (e.g., using the reduced CFAR threshold values described above). These results are processed with a DOA algorithm and results in an azimuth and elevation estimate for each detection peak. In this step, these DOAs are compared to validate whether the new detection in is actually a true positive. For example, the threshold may require the DOA determined by DOA estimation 214-1 be within three sigma ($\pm 3\sigma$) of the expected DoA.

In an example application of this process, the first radar device of the radar system may detect a first peak associated with four data points (which may be expressed in a 4x1 vector) including [$range_1$, $doppler_1$, $azimuth_1$, $elevation_1$]. The data is processed to generate a corresponding (4x4) covariance matrix $\Sigma_1$. The covariance matrix is mapped into the coordinate space of the second radar device to generate the same four data points expressed in that radar device's coordinate space:

[$range_2$, $doppler_2$, $azimuth_2$, $elevation_2$] and the corresponding covariance matrix $\Sigma_2$. The [$range_2$, $doppler_2$] data points are used to determine associations between detections made by the first radar device to the detections made by the second radar device. For the detections that only exist in the dataset of one radar device, a lowered CFAR threshold is calculated (e.g., using expression (2), above) and the data is processed using the reduced CFAR threshold to potentially identify new peaks using ($range_2$, $doppler_2$)) part of the propagated points. The newly identified peaks can be defined by 4x1 vector [$range_{new}$, $doppler_{new}$, $azimuth_{new}$, $elevation_{new}$]. A DOA validation process follows in which a determination is made as to whether the newly found ($azimuth_{new}$, $elevation_{new}$) values for the peaks detected using the reduced CFAR threshold match with expected ($azimuth_2$, $elevation_2$) values for peaks identified by the other radar device. These peaks may not match precisely (e.g., due to noise), but a match can be found using a threshold determined by the 2x2 portion of the covariance matrix $\Sigma_2$, that defines the threshold as $\pm 3\sigma$ as described above. If the DOA determined by DOA validator block 218a is not within that threshold amount, that candidate detection is discarded as a false positive.

The DOA estimates generated by DOA validator block 218a can, in some circumstances, be noisy if the signal-to-noise ratio (SNR) of the corresponding signal is too low or the snapshot of the signal the established the peak was not accurately captured at the very maximum value of the corresponding analog signal peak. In this configuration, therefore, DOA validator block 218a is configured to reject a majority of false positive peak because false detections (which are typically noise-like) rarely have the right estimated DOA.

A similar process is executed by enhanced CFAR block 212-2, DOA estimation 214-2, and DOA validator block 218-2 to determine a set of detect peaks (i.e., objects) for radar device 202-2.

For each radar device 202, the set of detected peaks from conventional signal processing (i.e., the output of blocks 208) and the enhanced set of detected peaks (i.e., the outputs of DOA validator blocks 218) are combined, respectively, by concatenators 220-1, 220-2. These concatenated datasets, which represent the union of the output datasets of blocks 208 and DOA validator block 218, will include a more complete set of detected objects such that radar device 202-1 detected an object but radar device 202-2 failed to detect the same object, that object detection will have been recovered in the concatenated dataset output by 220-2. If both radar device 202-1 and radar device 202-2 failed to detect a particular object, however, the object detection will not be recovered by this process. In general, therefore, the number of objects detected increases and it will not cause a detected object to be lost or ignored.

Although one or more embodiments of the present radar system 200 have been described in conjunction with first and second radar devices 202, it should be understood that a radar system may be implemented in accordance with the present disclosure in which three or more individual radar units may be utilized. In such a system, the outputs generated by a subset of the radar devices can be used to validate and confirm the object detections in another radar device made using reduced-threshold CFAR processing.

Because the present multi-radar processing may increase the number of potential detections (e.g., by enabling CFAR processing with reduced thresholds), the radar system's efficiency may be somewhat increased (in terms of processing terms and memory requirements) by using the present object detection algorithms only for far-field objects and relying on the various radar devices individually for near-field object detection. Furthermore, the processing may be restricted to data associated with particular regions about the vehicle, such as at the edges of the radar device's FOVs in which object detection accuracy of a single radar device may be restricted.

In some embodiments, the present multi-radar system can be used for object recovery in circumstances in which all radar devices failed to detect an object. In that case, a reduced CFAR detection threshold may be used by both radar devices during normal signal processing. The detected objects (which may likely include some false positives due to noise peaks that exceed the reduced threshold) can be validated by determining whether the other radar device also detected a peak at the same range and Doppler location.

In some aspects, the techniques described herein relate to a system, including: a first radar device, including: a first plurality of transmitter modules configured to transmit a first plurality of transmitted radar signals, a first plurality of receiver modules configured to receive first reflections of the first plurality of transmitted radar signals and to generate first signals based on the first received reflections, and a first processor configured to process the first signals to generate a first dataset that includes a first two-dimensional data frame, wherein the first two-dimensional data frame includes a first data peak associated with a first object associated with a first range value and a first direction of arrival value expressed in a first coordinate space relative to a location of the first radar device; a second radar device, including: a second plurality of transmitter modules configured to transmit a second plurality of transmitted radar signals, a second plurality of receiver modules configured to receive second reflections of the second plurality of transmitted radar signals and to generate second signals based on the second received reflections, and a second processor configured to process the second signals to generate a second dataset that includes first values expressed in a second coordinate space relative to a location of the second radar device; and a third processor configured to: receive the first dataset from the first radar device; receive the second dataset from the second radar device; modify the second dataset using a coordinate transformation function to generate a third dataset, wherein the third dataset includes second values expressed in the first coordinate space; process the third dataset using a constant false alarm rate algorithm to identify a second data peak associated with a second range value and a second direction of arrival; and determining, by comparing the second direction of arrival value to the first direction of arrival value, that the second data peak is associated with a valid detection of the first object.

In some aspects, the techniques described herein relate to a system, wherein first dataset and the second dataset are generated using the constant false alarm rate algorithm having a first detection threshold and the third dataset is processed using the constant false alarm rate algorithm having a second detection threshold, wherein the second detection threshold is less than the first detection threshold.

In some aspects, the techniques described herein relate to a system, wherein the second detection threshold is at least partially determined by a probability value associated with the first object.

In some aspects, the techniques described herein relate to a system, wherein the second detection threshold is calculated according to the following expression in which is the first detection threshold, is a probability detection associated with the first object, is a noise probability, and is a hyperparameter configured to control a scaling of the second detection threshold: .

In some aspects, the techniques described herein relate to a system, wherein processing the third dataset using the constant false alarm rate algorithm using the second detection threshold includes processing only a subset of the third dataset that falls within a region of interest determined at least in part by the first direction of arrival value.

In some aspects, the techniques described herein relate to a system, wherein a first field of vision of the first radar device at least partially overlaps a second field of vision of the second radar device.

In some aspects, the techniques described herein relate to a system, wherein the third processor is configured to determine that the second direction of arrival value is within a threshold value of the first direction of arrival.

In some aspects, the techniques described herein relate to a system, wherein the third processor is configured to determine that the second direction of arrival value is equal to the first direction of arrival.

In some aspects, the techniques described herein relate to a system, wherein the third processor is configured to communication with a driver-assistance system based upon the determination that the second data peak is associated with a valid detection of the first object.

In some aspects, the techniques described herein relate to a system, including: a first radar device configured to process first received signals using a constant false alarm rate algorithm using a first detection threshold to generate a first dataset that includes a data peak associated with a first object, wherein the data peak is associated with a range value and a direction of arrival value expressed in a first coordinate space; a second radar device configured to process second received signals using the constant false alarm rate algorithm using the first detection threshold to generate a second dataset including first values associated with range values and direction of arrival values expressed in a second coordinate space; and a processor configured to: receive the first dataset from the first radar device, receive the second dataset from the second radar device, modify the second dataset using a coordinate transformation function to generate a third dataset including second values associated with range values and direction of arrival values expressed in the first coordinate space, and process the third dataset using a constant false alarm rate algorithm using a second detection threshold to determine that a second data peak is present within the third dataset at the range value and the direction of arrival value to determine that the second peak is associated with a valid detection of the first object, wherein the second detection threshold is less than the first detection threshold.

In some aspects, the techniques described herein relate to a system, wherein the second detection threshold is at least partially determined by a detection probability value associated with the first object.

In some aspects, the techniques described herein relate to a system, wherein the second detection threshold is calculated according to the following expression in which is the first detection threshold, is a probability value associated with the detection probability, is a noise probability, and is a hyperparameter configured to control a scaling of the second detection threshold: .

In some aspects, the techniques described herein relate to a system, wherein the processor is configured to determine that the first object is associated with a valid object detection by determining that a first direction of arrival of the first object determined using the first dataset is equal to a second direction of arrival determined using the second data peak in the third dataset.

In some aspects, the techniques described herein relate to a system, wherein the processor is configured to determine that the first object is associated with a valid object detection by determining that a first direction of arrival of the first object determined using the first dataset is within a predetermined threshold of a second direction of arrival determined using the second data peak in the third dataset.

In some aspects, the techniques described herein relate to a method, including: receiving a first dataset from a first radar device, wherein the first dataset includes a data peak associated with a first object, wherein the data peak is associated with a range value and a direction of arrival value expressed in a first coordinate space; receiving a second dataset from a second radar device, wherein the second dataset includes values associated with range values and direction of arrival values expressed in a second coordinate space; modifying the second dataset using a coordinate transformation function to generate a third dataset including second values associated with range values and direction of arrival values expressed in the first coordinate space; and processing the third dataset to determine that a second data peak is present within the third dataset at the range value and the direction of arrival value to determine that the second peak is associated with a valid detection of the first object.

In some aspects, the techniques described herein relate to a method, wherein the first dataset and the second dataset are generated using a constant false alarm rate algorithm having a first detection threshold and the third dataset is processed using a constant false alarm rate algorithm having a second detection threshold.

In some aspects, the techniques described herein relate to a method, further including determining the second detection threshold is less than the first detection threshold.

In some aspects, the techniques described herein relate to a method, further including determining the second detection threshold using a detection probability value associated with the first object.

In some aspects, the techniques described herein relate to a method, further including determining the second detection threshold using the following expression in which is the first detection threshold, is the detection probability value, is a noise probability, and is a hyperparameter configured to control a scaling of the second detection threshold: .

In some aspects, the techniques described herein relate to a method, further including determining that the first object is associated with a valid object detection by determining that a first direction of arrival of the first object determined using the first dataset is within a threshold a second direction of arrival determined using the second data peak in the third dataset.

As will be appreciated by one skilled in the art, aspects of the present disclosure may be embodied as a system, process, method, and/or program product. Accordingly, various aspects of the present disclosure may take the form of an entirely hardware embodiment, an entirely software embodiment (including firmware, resident software, microcode, etc.), or embodiments combining software and hardware aspects, which may generally be referred to herein as a "circuit," "circuitry," "module," or "system." Furthermore, aspects of the present disclosure may take the form of a program product embodied in one or more computer readable storage medium(s) having computer readable program code embodied thereon. (However, any combination of one or more computer readable medium(s) may be utilized. The computer readable medium may be a computer readable signal medium or a computer readable storage medium.)

The block diagrams in the figures illustrate architecture, functionality, and operation of possible implementations of circuitry, systems, methods, processes, and program products according to various embodiments of the present disclosure. In this regard, certain blocks in the block diagrams may represent a module, segment, or portion of code, which includes one or more executable program instructions for implementing the specified logical function(s). It should also be noted that, in some implementations, the functions noted in the blocks may occur out of the order noted in the figures. For example, two blocks shown in succession may, in fact, be executed substantially concurrently, or the blocks may sometimes be executed in the reverse order, depending upon the functionality involved.

Modules implemented in software for execution by various types of processors may, for instance, include one or more physical or logical blocks of computer instructions, which may, for instance, be organized as an object, procedure, or function. Nevertheless, the executables of an identified module need not be physically located together, but may include disparate instructions stored in different locations which, when joined logically together, include the module, and achieve the stated purpose for the module. Indeed, a module of executable code may be a single instruction, or many instructions, and may even be distributed over several different code segments, among different programs, and across several memory devices. Similarly, operational data (e.g., knowledge bases of adapted weights and/or biases described herein) may be identified and illustrated herein within modules, and may be embodied in any suitable form and organized within any suitable type of data structure. The operational data may be collected as a single dataset, or may be distributed over different locations including over different storage devices. The data may provide electronic signals on a system or network.

These program instructions may be provided to one or more processors and/or controller(s) of a general-purpose computer, special purpose computer, or other programmable data processing apparatus (e.g., controller) to produce a machine, such that the instructions, which execute via the processor(s) of the computer or other programmable data processing apparatus, create circuitry or means for implementing the functions/acts specified in the block diagram block or blocks.

It will also be noted that each block of the block diagrams, and combinations of blocks in the block diagrams, can be implemented by special purpose hardware-based systems (e.g., which may include one or more graphics processing units) that perform the specified functions or acts, or combinations of special purpose hardware and computer instructions.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A system, comprising:

   a first radar device, including:

      a first plurality of transmitter modules configured to transmit a first plurality of transmitted radar signals,
      a first plurality of receiver modules configured to receive first reflections of the first plurality of transmitted radar signals and to generate first signals based on the first received reflections, and
      a first processor configured to process the first signals to generate a first dataset that includes a first two-dimensional data frame, wherein the first two-dimensional data frame includes a first data peak associated with a first object associated with a first range value and a first direction of arrival value expressed in a first coordinate space relative to a location of the first radar device;

   a second radar device, including:

      a second plurality of transmitter modules configured to transmit a second plurality of transmitted radar signals,
      a second plurality of receiver modules configured to receive second reflections of the second plurality of transmitted radar signals and to generate second signals based on the second received reflections, and
      a second processor configured to process the second signals to generate a second dataset that includes first values expressed in a second coordinate space relative to a location of the second radar device; and

a third processor configured to:

receive the first dataset from the first radar device;

receive the second dataset from the second radar device;

modify the second dataset using a coordinate transformation function to generate a third dataset, wherein the third dataset includes second values expressed in the first coordinate space;

process the third dataset using a constant false alarm rate algorithm to identify a second data peak associated with a second range value and a second direction of arrival; and

determining, by comparing the second direction of arrival value to the first direction of arrival value, that the second data peak is associated with a valid detection of the first object.

2. The system of claim 1, wherein first dataset and the second dataset are generated using the constant false alarm rate algorithm having a first detection threshold and the third dataset is processed using the constant false alarm rate algorithm having a second detection threshold, wherein the second detection threshold is less than the first detection threshold.

3. The system of claim 2, wherein the second detection threshold is at least partially determined by a probability value associated with the first object.

4. The system of claim 3, wherein the second detection threshold is calculated according to the following expression in which $Thr_{default}$ is the first detection threshold, Pr [*object*] is a probability detection associated with the first object, Pr [*noise*] is a noise probability, and $\alpha$ is a hyperparameter configured to control a scaling of the second detection threshold:

$$Thr_{default} - \alpha \cdot \frac{\text{Pr}\,[object]}{\text{Pr}[object]+\text{Pr}\,[noise]}.$$

5. The system of claim 2, wherein processing the third dataset using the constant false alarm rate algorithm using the second detection threshold includes processing only a subset of the third dataset that falls within a region of interest determined at least in part by the first direction of arrival value.

6. The system according to any preceding claim, wherein a first field of vision of the first radar device at least partially overlaps a second field of vision of the second radar device.

7. The system according to any preceding claim, wherein the third processor is configured to determine that the second direction of arrival value is within a threshold value of the first direction of arrival.

8. The system according to any preceding claim, wherein the third processor is configured to determine that the second direction of arrival value is equal to the first direction of arrival.

9. The system according to any preceding claim, wherein the third processor is configured to communication with a driver-assistance system based upon the determination that the second data peak is associated with a valid detection of the first object.

10. A method, comprising:

receiving a first dataset from a first radar device, wherein the first dataset includes a data peak associated with a first object, wherein the data peak is associated with a range value and a direction of arrival value expressed in a first coordinate space;

receiving a second dataset from a second radar device, wherein the second dataset includes values associated with range values and direction of arrival values expressed in a second coordinate space;

modifying the second dataset using a coordinate transformation function to generate a third dataset including second values associated with range values and direction of arrival values expressed in the first coordinate space; and

processing the third dataset to determine that a second data peak is present within the third dataset at the range value and the direction of arrival value to determine that the second peak is associated with a valid detection of the first object.

**11.** The method of claim 11, wherein the first dataset and the second dataset are generated using a constant false alarm rate algorithm having a first detection threshold and the third dataset is processed using a constant false alarm rate algorithm having a second detection threshold.

**12.** The method according to claim 10 or claim 11, further comprising determining the second detection threshold is less than the first detection threshold.

**13.** The method of claim 12, further comprising determining the second detection threshold using a detection probability value associated with the first object.

**14.** The method of claim 13, further comprising determining the second detection threshold using the following expression in which $Thr_{default}$ is the first detection threshold, Pr [*object*] is the detection probability value, Pr[*noise*] is a noise probability, and $\alpha$ is a hyperparameter configured to control a scaling of the second detection threshold:

$$Thr_{default} - \alpha \cdot \frac{\Pr[object]}{\Pr[object] + \Pr[noise]}.$$

**15.** The method according to any of claims 10 to 14, further comprising determining that the first object is associated with a valid object detection by determining that a first direction of arrival of the first object determined using the first dataset is within a threshold a second direction of arrival determined using the second data peak in the third dataset.

FIG. 1-1

EP 4 737 946 A1

FIG. 1-2

FIG. 2

FIG. 3

EP 4 737 946 A1

FIG. 4

FIG. 5

EP 4 737 946 A1

FIG. 6

Europäisches
Patentamt

European
Patent Office

Office européen
des brevets

# EUROPEAN SEARCH REPORT

**Application Number**

EP 25 21 1080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/021756 A1 (SONY GROUP CORP [JP]) 23 February 2023 (2023-02-23) * abstract; figures 1-3 * * paragraph [0001] - paragraph [0059] * ----- | 1-15 | INV. G01S13/42 G01S13/87 ADD. G01S13/931 |
| A | US 2022/035019 A1 (ZHOU MU [CN] ET AL) 3 February 2022 (2022-02-03) * the whole document * ----- | 1-15 | |
| A | US 12 000 951 B2 (PLATO SYSTEMS INC [US]) 4 June 2024 (2024-06-04) * the whole document * ----- | 1-15 | |
| A | US 2020/103523 A1 (LIU YU [US] ET AL) 2 April 2020 (2020-04-02) * abstract; figure 6 * * paragraph [0056] - paragraph [0058] * ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 10 March 2026 | López de Valle, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 1080

This annex lists the patent family members relating to the patent documents cited in  the above-mentioned European search report.
The members are as contained in the European Patent Office EDP file on
The European Patent Office is in no way liable for these particulars which are merely given for the purpose of information.

10-03-2026

| Patent document cited in search report | | | Publication date | Patent family member(s) | | Publication date |
|---|---|---|---|---|---|---|
| WO | 2023021756 | A1 | 23-02-2023 | US | 2025102657 A1 | 27-03-2025 |
| | | | | WO | 2023021756 A1 | 23-02-2023 |
| US | 2022035019 | A1 | 03-02-2022 | CN | 113242983 A | 10-08-2021 |
| | | | | EP | 3882661 A1 | 22-09-2021 |
| | | | | JP | 7303878 B2 | 05-07-2023 |
| | | | | JP | 2022512248 A | 02-02-2022 |
| | | | | US | 2022035019 A1 | 03-02-2022 |
| | | | | WO | 2020118582 A1 | 18-06-2020 |
| US | 12000951 | B2 | 04-06-2024 | US | 2021124011 A1 | 29-04-2021 |
| | | | | US | 2021156990 A1 | 27-05-2021 |
| | | | | WO | 2020006531 A1 | 02-01-2020 |
| | | | | WO | 2020006533 A1 | 02-01-2020 |
| US | 2020103523 | A1 | 02-04-2020 | CN | 112752988 A | 04-05-2021 |
| | | | | EP | 3857264 A1 | 04-08-2021 |
| | | | | JP | 7527277 B2 | 02-08-2024 |
| | | | | JP | 2022502306 A | 11-01-2022 |
| | | | | US | 2020103523 A1 | 02-04-2020 |
| | | | | WO | 2020069025 A1 | 02-04-2020 |

For more details about this annex : see Official Journal of the European Patent Office, No. 12/82